# EUROPEAN PATENT SPECIFICATION

(11) **EP 1 394 033 B1**
(45) Date of publication and mention of the grant of the patent: **21.06.2006**
(21) Application number: 03077729.6
(22) Date of filing: 01.09.2003
(51) Int. Cl.: B62K 21/26

(54) **Grip for a bicycle handlebar and bicycle handlebar with such grips**
Handgriff für eine Fahrradlenkstange und Fahrradlenkstange mit solchen Handgriffen
Poignée pour guidon de bicyclette et guidon de bicyclette avec des telles poignées

(30) Priority: 01.09.2002 NL 1021370
(43) Date of publication of application: 03.03.2004
(73) Proprietor: Batavus B.V., 8444 AR Heerenveen (NL)
(72) Inventor: Smits, Robertus Constantinus Petrus Maria, 8421 PN Oldeberkoop (NL)
(74) Representative: Prins, Adrianus Willem

(56) References cited:
- EP-A- 1 174 318
- BE-A- 465 907
- DE-U- 20 207 483
- US-A- 2 439 636

## Description

This invention relates to an assembly according to the introductory portion of claim 1 and to a bicycle handlebar for such an assembly.

In practice grips for a bicycle generally have a shell-shaped portion whose inner surface is in contact with the outer surface of an end portion of the bicycle handlebar, the shell-shaped portion clamping around the respective end portion of the bicycle handlebar which results in sufficient friction to keep the grip in use in its position on the bicycle handlebar. However, a drawback of such grips is that, on the one hand, assembly and disassembly are laborious and, on the other hand, due to material ageing, and at high temperatures, the fixation of the grips is insufficient to prevent rotation and axial displacement of the grip. Unintended rotation of the grips around the handlebar leads to a reduction of convenience, especially if the grips have a non-circular outer circumference which, in the intended position, is adapted to the shape of the human hand and for offering an enlarged supporting surface for the hand. Unintended axial displacement of a grip can lead to very dangerous situations if the grip slips off the handlebar.

An assembly according to the introductory portion of claim 1 is known from BE-A-465 907. In this assembly, the anchoring member is a punch screw that punches into the handlebar or is screwed into a hole in the handlebar.

It is an object of the invention to enhance safety because insufficient fixation of the grip becomes noticeable to the user before potentially dangerous axial grip displacement off the end portion of the handlebar becomes possible.

This object is achieved according to the invention by providing a grip according to claim 1. By virtue of the anchoring member, a high friction between the bicycle handlebar and the shell-shaped portion for the purpose of the intended fixation is superfluous. As a consequence, assembly and disassembly of the grip can be considerably facilitated, without this compromising effective fixation of the grip.

The invention may also be embodied in a bicycle handlebar according to claim 9 which is specifically arranged for use as a part of an assembly according to the invention.

In the dependent claims, particular embodiments of the invention are laid down.

In the following, further aspects and effects as well as details concerning the invention will be further elucidated on the basis of an exemplary embodiment represented in the drawing. In the drawing:
Fig. 1 shows a side elevation in longitudinal cross section of an example of an assembly according to the invention;
Fig. 2 shows a perspective view of a bicycle handlebar of the assembly according to Fig. 1;
Fig. 3 shows a side elevation of an end portion of the bicycle handlebar of the assembly according to Fig. 1; and
Fig. 4 shows an end view of the bicycle handlebar shown in Figs. 1 and 2.

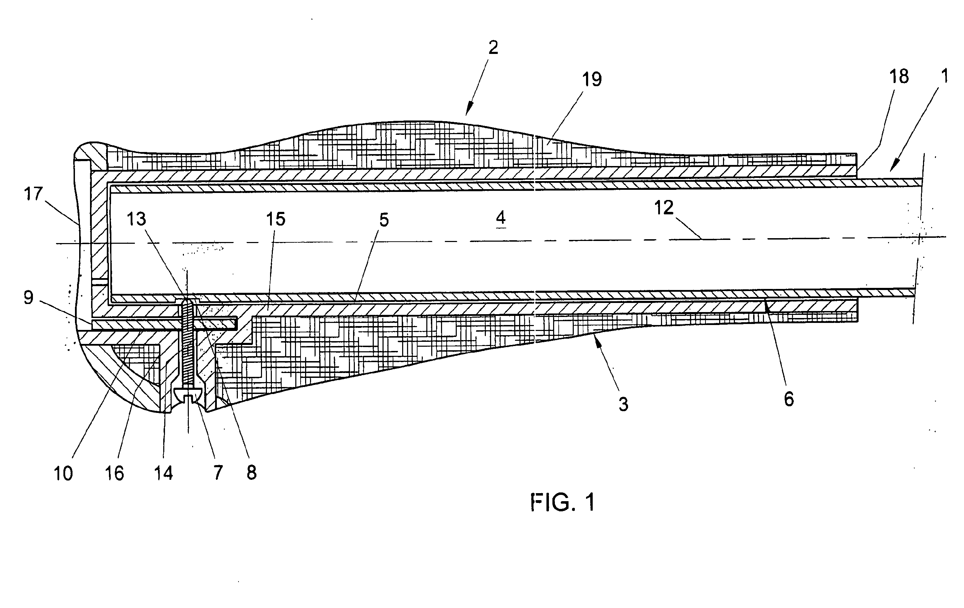

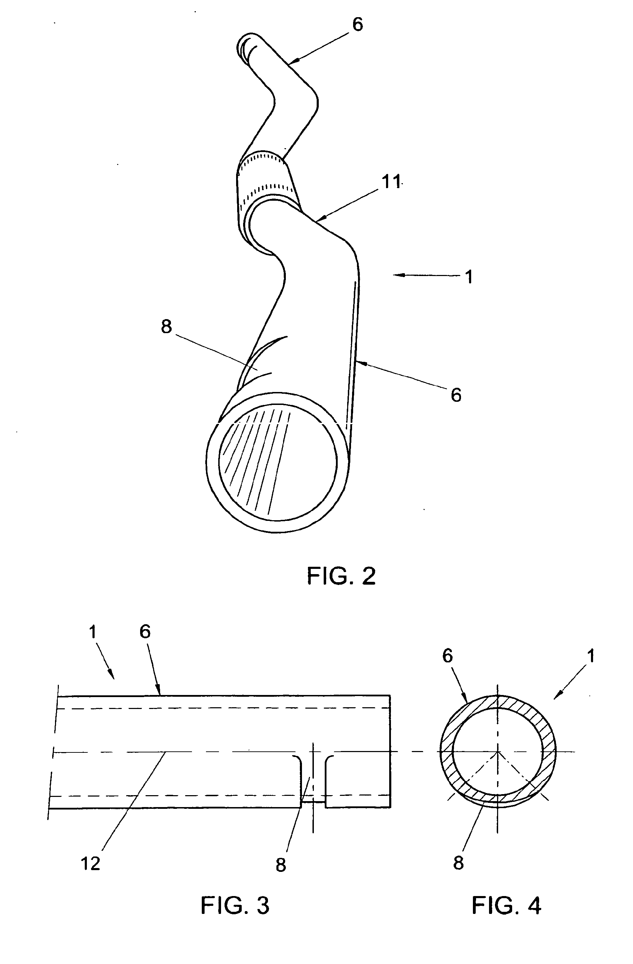

In the Figs. 1-4, there is shown an example of a bicycle handlebar 1 according to the invention, or at least an end portion thereof. The bicycle handlebar 1 has end portions 6 for receiving grips 2. The end portions 6 are bent relative to a central portion 11 of the bicycle handlebar 1 to bring the grips 2 in a position agreeable to the user. Depending on the type of bicycle, the end portions may be bent to a greater or lesser extent, or differently, with respect to the central portion 11.

Fig. 1 further shows an example of a grip 2 of an assembly according to the invention, mounted on the bicycle handlebar 1. The grip 2 according to this example has a shell-shaped portion 3 which bounds an inner space 4. In the mounted condition shown in Fig. 1, an inner wall surface 5 of the shell-shaped portion 3 is in contact with an end portion 6 of the bicycle handlebar 1 received therein.

Projecting relative to the inner wall surface 5, into the inner space 4 of the shell-shaped portion 3 is an anchoring member in the form of an M4 bolt 7 which engages an anchoring provision in the form of a recess 8 in the bicycle handlebar 1. The bolt 7 has been screwed into an insert piece 9, which has been placed in a slot 10 in the grip 2.

For mounting the grip 2 on one of the end portions 6 of the bicycle handlebar, the bolt 7 is brought into a position in which it is retracted from the inner space 4 of the shell-shaped portion 3 of the grip 2. The grip 2 can now be simply slid over the end portion 6 of the handlebar 1, which end portion preferably fits into the inner space 4 with a clearance-free and optionally slightly clamped fit. Since the friction between the grip 2 and the end portion 6 of the handlebar is less than would be necessary to keep the grip 2 reliably in position upon placement, placing the grip 2 requires little force. After the grip 2 has been placed, it is brought into a position in which the bolt 7 is situated opposite the recess 8. Next, the bolt 7 is tightened with the aid of a screwdriver, so that the end of the bolt 7 remote from the head of the bolt 7 engages in the recess 8. The grip 2 is now locked against axial displacement off the end portion 6 of the bicycle handlebar 1. Next, the position of the grip 2 in rotational sense about the centerline 12 of the end portion 6 can be fixed by screwing the bolt 7 tightly, so that the end portion 6 of the bicycle handlebar 1 is clamped between the bolt and an oppositely situated portion of the inner wall 5 of the shell-shaped portion 3. The end 13 of the bolt 7 remote from the head is moreover provided with a sharp edge, so that upon tightening of the bolt 7 a pit is formed in the end portion 6, which provides for additional grip of the bolt 7 on the end portion 6. Upon tightening of the bolt 7, the reaction force exerted on the bolt by the end portion 6 is distributed via the insert piece 9 and transmitted to the shell-shaped portion 3 of the grip 2. The insert piece 9 is preferably manufactured from metal, in particular stainless steel. Because the force introduction and distribution proceeds via the insert piece, the shell-shaped portion 3 needs to meet only relatively low strength and hardness requirements in the area of the anchoring member 7 and therefore may be manufactured, for instance, from a conventional plastic material.

As the bolt 7 is operable for engaging and releasing the bicycle handlebar 1, the grip 1 can be simply mounted and demounted repeatedly.

The screw thread in the passage 14 through the wall 15 of the shell-shaped portion 3 of the grip 2, which screw thread is engaged by a screw thread of the bolt 7, makes it possible to exert a large clamping force. Further, the screw thread transmission between the bolt 7 and the insert piece 9 is self-locking, so that no separate locking of the anchoring member 7 is needed. By way of additional retaining provision to avoid the bolt 7 being loosened through vibration, a clamping ring 16 from plastic is mounted in the passage 14, which moreover prevents penetration of moisture and dirt.

The head of the anchoring member 7, at least when it has been brought into a condition where it engages the anchoring provision 8 in the end portion 6 of the bicycle handlebar 1, is countersunk in the shell-shaped portion 3 of the grip 2, so that it does not bother the user, while injury due to any sharp edges of the anchoring member 7 is prevented.

As the insert piece 9 is situated in a slot 10 which extends from an entry in a direction substantially parallel to a wall 15 of the shell-shaped portion 3, the insert piece 9 can be simply mounted. The bolt reaching transversely through the plate-shaped insert piece 9 and the slot 10 at the same time constitutes a lock preventing the insert piece 9 leaving the slot 10.

The grip 2 has a closed end 17 and the anchoring member 7 is situated near the closed end. This provides the advantage that the corresponding position of the anchoring provisions 8 on the bicycle handlebar 1 for cooperation with the anchoring member 7 of the grip 1 is located close to the ends of the bicycle handlebar 1. In the area of that position, the bicycle handlebar 1 is not subject to heavy loads in operation.

The shell-shaped portion 3 is composed of an inner shell 18 and a covering 19, fixedly connected therewith, outside the inner shell 18. This covering 19 is manufactured from a softer material than the material of the inner shell 18. The grip 2 is thus built up from a relatively form-retaining and smooth skeleton 18, in which the anchoring member 7 is secured and by way of which the forces thereby exerted are absorbed, and a soft, relatively rough outer covering which constitutes a comfortable support and surface of agreeable tactile properties for a hand of the user.

The anchoring provision is designed as a slot 8 which extends over at least a portion of the circumference of the bicycle handlebar 1. According to this example, the slot extends through an angular range of 90°. As the anchoring member 7 engages in such a slot 8, loosening the anchoring member initially permits only rotation of the grip 2 about the end portion 6 of the bicycle handlebar 1, but not yet an essential axial displacement of the grip 2. This facilitates adjusting the position of the grip 2 in rotational sense about the end portion 6 of the bicycle handlebar 1 without unintended axial displacement, and further enhances safety because insufficient fixation of the grip 2 becomes noticeable to the user when the grip 2 can turn. However, the potentially dangerous axial grip displacement off the end portion 6 is not yet possible by then, because the anchoring member 7 engages in the slot 8.

Incidentally, adjustability of the position of the grip 2 in a rotational sense about the end portion 6 of the bicycle handlebar 1 provides particular advantage when the grip 2 has an outer shape ergonomically adapted to the shape of the human hand that differs essentially from a solid of revolution about the centerline 12 of the inner space 4. This adjustability is then of particular advantage when the bicycle handlebar 1 is mounted in a connecting piece with the handlebar stem that is provided with a quick-adjustment provision, allowing ready adjustment of the position of the bicycle handlebar 1. The position of the grips 2 can then be adjusted rapidly to the changed position of the bicycle handlebar 1.

As the anchoring provision 8 on the bicycle handlebar 1 is designed as a radially inward recess in an outer surface of the bicycle handlebar 1, which recess 8 has a bottom portion for taking up a clamping force, the anchoring member 7 of the grip needs to engage the anchoring provision 8 on the bicycle handlebar 1 only from the outside alone. This eliminates the need to provide anchoring provisions inside the bicycle handlebar 1.

It is noted that within the framework of the invention as set forth in the claims, many other design possibilities are conceivable. For instance, an anchoring member can be used that reaches diametrically through passages in the bicycle handlebar, for instance in the form of a bolt whose head is situated on one side of the shell-shaped portion of the grip and which engages in a nut on the diametrically opposite side of the shell-shaped portion of the grip.

## Claims

1. An assembly of a grip and a bicycle handlebar, the grip having a shell-shaped portion (3) which bounds an inner space (4) for receiving an end portion (6) of a bicycle handlebar (1) in contact with an inner wall surface (5) of the shell-shaped portion (3) and an anchoring member (7), the bicycle handlebar (1) being provided with an anchoring provision (8) engaged by the anchoring member (7), wherein the anchoring member (7) is operable for engagement of and release of the bicycle handlebar (1) **characterized in that** the anchoring provision (8) is designed as a slot which extends over at least a portion of the circumference of the bicycle handlebar (1).

2. An assembly according to claim 1, wherein the anchoring member (7) projects relative to the inner wall surface (5) into the inner space (4) of the shell-shaped portion (3).

3. An assembly according to claim 2, further comprising a screw thread in a passage (14) through a wall (15) of the shell-shaped portion (3) of the grip, which screw thread is engaged by a screw thread of the anchoring member (7).

4. An assembly according to claim 3, further comprising an insert piece (9) in which the screw thread in the hole (14) in the wall (15) of the shell-shaped portion (3) is provided.

5. An assembly according to claim 4, wherein the insert piece (9) is situated in a slot (10) which extends from an entry in a direction substantially parallel to a wall (15) of the shell-shaped portion (3).

6. An assembly according to any one of the preceding claims, wherein the grip has a closed end (17) and wherein the anchoring member (7) is situated near the closed end (17).

7. An assembly according to any one of the preceding claims, wherein the shell-shaped portion (3) is composed of an inner shell (18) and, fixedly connected therewith, a covering (19) outside the inner shell (18), which covering (19) is manufactured from a softer material than the material of the inner shell (18).

8. An assembly according to any one of the preceding claims, wherein the anchoring provision (8) is designed as a radially inward recess in an outer surface of the bicycle handlebar (1), which recess has a bottom portion for taking up a clamping force.

9. A bicycle handlebar having a substantially tubular body and end portions (6) bent relative to a central portion (11), for receiving grips (2), the end portions (6) each being provided with an anchoring provision (8) designed as a slot for cooperation with an anchoring member (7) of a grip, which slot extends over a portion of the circumference of the bicycle handlebar (1).

## Patentansprüche

1. Anordnung eines Griffs und einer Fahrradlenkstange, wobei der Griff ein gehäuseförmiges Teil (3), das einen Innenraum (4) zur Aufnahme eines Endbereichs (6) einer Fahrradlenkstange (1) in Berührung mit einer Innenwandfläche (5) des gehäuseförmigen Teils (3) begrenzt, und ein Verankerungselement (7) aufweist, wobei die Fahrradlenkstange (1) mit einer Verankerungseinrichtung (8) ausgestattet ist, an der das Verankerungselement (7) angreift, wobei das Verankerungselement (7) zum in Eingriff bringen mit und zur Freigabe der Fahrradlenkstange (1) bedienbar ist, **dadurch gekennzeichnet, daß** die Verankerungseinrichtung (8) als ein Schlitz ausgestaltet ist, der sich über zumindest einen Teil des Umfangs der Fahrradlenkstange (1) erstreckt.

2. Anordnung nach Anspruch 1, bei der das Verankerungselement (7) in Bezug auf die Innenwandfläche (5) in den Innenraum (4) des gehäuseförmigen Teils (3) vorsteht.

3. Anordnung nach Anspruch 2, die ferner ein Schraubengewinde in einem Durchgang (14) durch eine Wand (15) des gehäuseförmigen Teils (3) des Griffs aufweist, wobei das Schraubengewinde mit einem Schraubengewinde des Verankerungselements (7) in Eingriff steht.

4. Anordnung nach Anspruch 3, die ferner ein Einsatzstück (9) aufweist, in dem das Schraubengewinde in der Bohrung (14) in der Wand (15) des gehäuseförmigen Teils (3) vorgesehen ist.

5. Anordnung nach Anspruch 4, bei der das Einsatzstück (9) in einem Schlitz (10) angeordnet ist, der sich von einem Eingang in einer Richtung im wesentlichen parallel zu einer Wand (15) des gehäuseförmigen Teils (3) erstreckt.

6. Anordnung nach einem der vorhergehenden Ansprüche, bei der der Griff ein geschlossenes Ende (17) hat, und bei der das Verankerungselement (7) in der Nähe des geschlossenen Endes (17) angeordnet ist.

7. Anordnung nach einem der vorhergehenden Ansprüche, bei der das gehäuseförmige Teil (3) aus einem inneren Gehäuse (18) und, fest mit diesem verbunden, einer Umhüllung (19) außerhalb des inneren Gehäuses (18) besteht, wobei die Umhüllung (19) aus einem Material hergestellt ist, das weicher als das Material des inneren Gehäuses (19) ist.

8. Anordnung nach einem der vorhergehenden Ansprüche, bei der die Verankerungseinrichtung (8) als eine radial nach innen gerichtete Vertiefung in einer Außenfläche der Fahrradlenkstange (1) ausgestaltet ist, wobei die Vertiefung einen unteren Bereich zum Aufnehmen einer Klemmkraft aufweist.

9. Fahrradlenkstange mit einem im wesentlichen rohrförmigen Körper und in Bezug auf einen mittleren Bereich (11) abgewinkelten Endbereichen (6) zur Aufnahme von Griffen (2), wobei die Endbereiche (6) jeweils mit einer Verankerungseinrichtung (8) versehen sind, die als ein Schlitz zum Zusammenwirken mit einem Verankerungselement (7) eines Griffs ausgestaltet ist, wobei sich der Schlitz über einen Teil des Umfangs der Fahrradlenkstange (1) erstreckt.

## Revendications

1. Assemblage d'une poignée et d'un guidon de bicyclette, la poignée ayant une partie en forme de manchon (3) qui contient un espace intérieur (4) destiné à recevoir une partie d'extrémité (6) d'un guidon de bicyclette (1) qui est en contact avec une surface de paroi intérieure (5) de la partie en forme de manchon (3) et un élément d'ancrage (7), le guidon de bicyclette (1) étant pourvu d'un moyen d'ancrage (8) engagé par l'élément d'ancrage (7), dans lequel l'élément d'ancrage (7) peut être actionné pour engager et libérer le guidon de bicyclette (1), **caractérisé en ce que** le moyen d'ancrage (8) est réalisé sous la forme d'une fente qui s'étend sur au moins une partie de la circonférence du guidon de bicyclette (1).

2. Assemblage selon la revendication 1, dans lequel l'élément d'ancrage (7) fait saillie par rapport à la surface de paroi intérieure (5) et pénètre dans l'espace intérieur (4) de la partie en forme de manchon (3).

3. Assemblage selon la revendication 2, comprenant en outre un filet à vis dans un passage (14) traversant une paroi (15) de la partie en forme de manchon (3) de la poignée, lequel filet à vis est engagé par un filet mâle de l'élément d'ancrage (7).

4. Assemblage selon la revendication 3, comprenant en outre une pièce d'insertion (9) dans laquelle est disposé le filet à vis du trou (14) pratiqué dans la paroi (15) de la partie en forme de manchon (3).

5. Assemblage selon la revendication 4, dans lequel la pièce d'insertion (9) est située dans une encoche (10) qui s'étend à partir d'une entrée en suivant une direction sensiblement parallèle à une paroi (15) de la partie en forme de manchon (3).

6. Assemblage selon l'une quelconque des revendications précédentes, dans lequel la poignée a une extrémité fermée (17) et dans laquelle l'élémeut d'ancrage (7) est située à proximité de l'extrémité fermée (17).

7. Assemblage selon l'une quelconque des revendications précédentes, dans lequel la partie en forme de manchon (3) est composée d'un manchon intérieur (18) et d'un recouvrement (19) extérieur au manchon intérieur (18) auquel il est relié de manière fixe, lequel recouvrement (19) est fabriqué à partir d'un matériau plus doux que le matériau du manchon intérieur (18).

8. Assemblage selon l'une quelconque des revendications précédentes, dans lequel le moyen d'ancrage (8) est réalisé sous la forme d'un évidement orienté radialement vers l'intérieur dans une surface extérieure du guidon de bicyclette (1), lequel évidement a une partie inférieure destinée à supporter une force de serrage.

9. Guidon de bicyclette ayant un corps sensiblement tubulaire et des parties d'extrémité (6) courbées par rapport à une partie centrale (11) et destinées à recevoir des poignées (2), chacune des parties d'extrémité (6) étant pourvue d'un moyen d'ancrage (8) réalisé sous la forme d'une fente destinée à coopérer avec un élément d'ancrage (7) d'une poignée, laquelle fente s'étend sur une partie de la circonférence du guidon de bicyclette (1).
